# EUROPEAN PATENT APPLICATION

(11) **EP 4 614 992 A1**
(43) Date of publication of application: **10.09.2025**
(21) Application number: 22963844.0
(22) Date of filing: 01.11.2022
(51) Int. Cl.: H04N 23/60

(54) **CONTROL DEVICE FOR CAMERA, AND CAMERA**

(71) Applicant: Shenzhen Hollyland Technology Co., Ltd., Shenzhen, Guangdong 518108 (CN)
(72) Inventor: LIU, Dezhi, Shenzhen, Guangdong 518108 (CN); CHEN, Qixun, Shenzhen, Guangdong 518108 (CN); LI, Wei, Shenzhen, Guangdong (CN); LIU, Yanhua, Shenzhen, Guangdong (CN)
(74) Representative: Grünecker Patent- und Rechtsanwälte PartG mbB
(86) International application number: PCT/CN2022/129090
(87) International publication number: WO 2024/092526

(57) **Abstract**

Embodiments of the present disclosure provide a control device for a camera and a camera. The control device includes a main processor, a coprocessor, and an AI chip. When the control device is configured to detect a subject to be shot and automatically determine a focusing region, image preprocessing and a target detection network may be deployed on the AI chip that is good at matrix-related operations, an image normalization processing process is deployed on the coprocessor that is good at floating-point operations, a post-processing process for an output result of the target detection network and a focusing control process for the camera are deployed on the main processor that is good at logical operations. The focusing region is automatically determined through cooperation of a plurality of processors, and each processor executes a task that it is good at, which can greatly improve a processing speed and meet a real-time requirement of a live streaming scene.

## Description

### TECHNICAL FIELD

The present disclosure relates to the field of photographing technologies, and in particular, to a control device for a camera and a camera.

### BACKGROUND

When taking pictures with a camera, because distances between objects in a scene and the camera are different, and it is impossible for all objects in an entire field of view to be clear due to an influence of a depth of field of a camera lens, a small region of interest (ROI) of a user needs to be selected as a focusing region, and focusing is performed based on the focusing region, so that an object in the focusing region is clearly imaged.

At present, there are two ways to determine the focusing region, one is that the user manually operates in the picture to determine the focusing region, which is relatively cumbersome. The other way is that a subject to be shot may be automatically detected from the image, and an image region in which the subject to be shot is located is used as the focusing region. In this manner, the user does not need to manually operate, which is more intelligent. However, when it comes to automatically detecting and focusing on the subject to be shot, the current technology has a slow processing speed, and a processing frame rate generally does not exceed 30 frames/s, which cannot meet the needs of some scenes that require high real-time performance.

### SUMMARY

In view of the above, embodiments of the present disclosure provide a control device for a camera and a camera.

According to a first aspect of embodiments of the present disclosure, a control device for a camera is provided, the control device includes a main processor, a coprocessor, and an AI chip, and a pre-trained target detection network is deployed in the AI chip;
the AI chip is configured to preprocess an image captured by the camera to obtain a preprocessed image satisfying a format requirement of the target detection network;
the coprocessor is configured to normalize the preprocessed image to obtain normalized image data;
the AI chip is further configured to input the normalized image data into the target detection network, and obtain an output result of the target detection network, and the output result is configured to determine a position of a subject to be shot in the image; and
the main processor is configured to determine the position of the subject to be shot in the image according to the output result, and determine a focusing region based on the position to control the camera to focus based on the focusing region.

According to a second aspect of embodiments of the present disclosure, a camera is provided, the camera includes an image sensor, a lens, and the control device according to the first aspect, the image sensor is configured to capture an image and send the image to the control device, and the control device is configured to control the lens to focus based on the image.

By applying the embodiments of the present disclosure, considering that some existing embedded hardware processing platforms usually include a plurality of processors such as a main processor, a coprocessor, and an AI chip, when such embedded hardware processing platforms are used to detect a subject to be shot and automatically determine a focusing region, image preprocessing and a target detection network may be deployed on the AI chip that is good at matrix-related operations, an image normalization processing process is deployed on the coprocessor that is good at floating-point operations, a post-processing process for an output result of the target detection network and a focusing control process for the camera are deployed on the main processor that is good at logical operations. The focusing region is automatically determined through cooperation of a plurality of processors, and each processor executes a task that it is good at, which can greatly improve a processing speed and meet a real-time requirement of a live streaming scene.

It should be understood that the foregoing general description and the following detailed description are merely exemplary and explanatory, and cannot limit the present disclosure.

### BRIEF DESCRIPTION OF DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram illustrating an embedded hardware processing platform in the related art, according to an embodiment of the present disclosure.
FIG. 2 is a schematic diagram illustrating a control device for a camera, according to an embodiment of the present disclosure.
FIG. 3 is a schematic diagram of an upper body region of a human body as a subject to be shot, according to an embodiment of the present disclosure.
FIG. 4 is a schematic diagram of determining a focusing object from a plurality of subjects to be shot, according to an embodiment of the present disclosure.
FIG. 5 is a schematic diagram illustrating a target detection network outputting a plurality of candidate boxes, according to an embodiment of the present disclosure.
FIG. 6 is a schematic diagram illustrating deployment of processing steps for determining a focusing region on an embedded hardware processing platform of a live streaming camera, according to an embodiment of the present disclosure.
FIG. 7 is a schematic structural diagram illustrating a camera, according to an embodiment of the present disclosure.

### DETAILED DESCRIPTION

Exemplary embodiments, examples of which are illustrated in the accompanying drawings, will be described in detail herein. When the following description refers to the drawings, like numerals in different drawings indicate the same or similar elements, unless otherwise indicated. The embodiments described in the following exemplary embodiments do not represent all embodiments consistent with the present disclosure. Rather, they are merely examples of devices and methods consistent with some aspects of the present disclosure as detailed in the appended claims.

The terminology used herein is for the purpose of describing particular embodiments only and is not intended to be limiting of the disclosure. As used in this specification and the appended claims, the singular forms "a/an", "said", and "the" are also intended to include plural forms unless clearly indicated otherwise in the context. It should also be understood that the term "and/or" as used herein refers to and includes any or all possible combinations of one or more associated listed items.

It should be understood that although the terms "first", "second", "third", etc. may be used in this disclosure to describe various information, such information should not be limited by these terms. These terms are only used to distinguish the information of the same type from each other. For example, without departing from the scope of the present disclosure, first information may also be referred to as second information, and similarly, the second information may also be referred to as the first information. Depending on the context, a term "if" as used herein may be interpreted as "where" or "when" or "in response to determining".

When taking pictures with a camera, because distances between objects in a scene and the camera are different, and it is impossible for all objects in an entire field of view to be clear due to an influence of a depth of field of a camera lens, a small region of interest (ROI) of a user needs to be selected as a focusing region, and focusing is performed based on the focusing region, so that an object in the focusing region is clearly imaged. At present, there are two ways to determine the focusing region, one is that the user manually operates in the picture, for example, the user clicks and selects the subject to be shot, and then determines the region where the subject to be shot is located as the focusing region. This method requires the user to perform a manual operation during each shoot, which is relatively cumbersome and not intelligent enough, and cannot meet a requirement in some scenes (for example, a tracking photographing scene) in which continuous focusing is required. The other way is that a subject to be shot may be automatically identified from the image, and an image region in which the subject to be shot is located is used as the focusing region. For example, taking the subject to be shot being a face as an example, the position of the face may be automatically identified from the image before focusing, and then the region where the face is located is used as the focusing region.

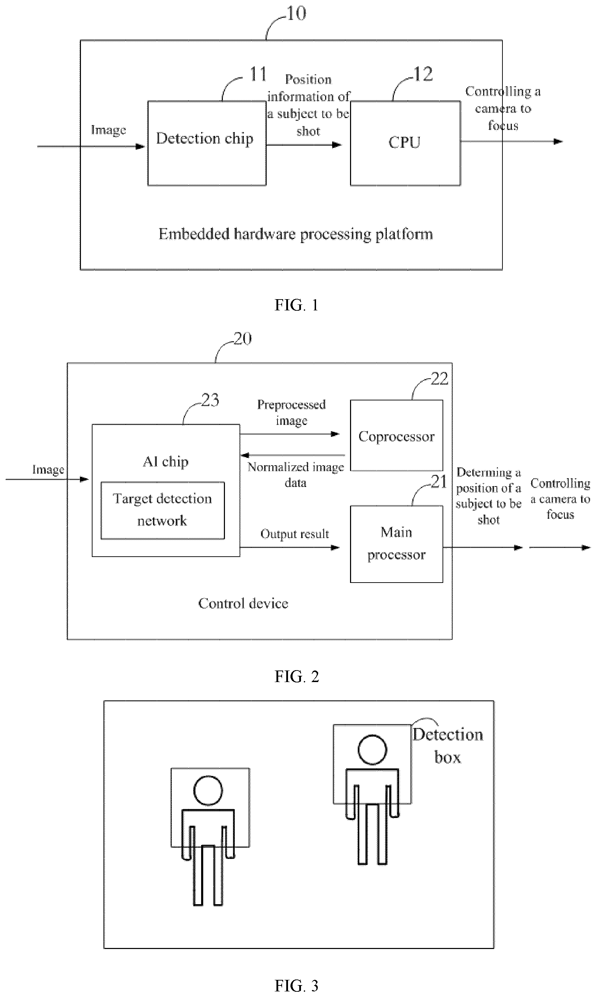

At present, for the scene in which the focusing region is automatically identified, some manufacturers have also developed some embedded hardware processing platforms for controlling the focus of the camera. As shown in FIG. 1, these hardware processing platforms 10 generally include a detection chip 11 specially configured to detect a subject to be shot and a CPU (Central Processing Unit) 12, and of course, other processors may also be provided based on actual requirements. After detecting position information of the subject to be shot in an image through the detection chip 11, the position information is sent to the CPU 12, and the CPU 12 determines a focusing region based on the position information and controls the camera to focus. Because the detection of the subject to be shot usually uses a neural network, which involves a large amount of calculation, and a processing capability of the detection chip 11 in the embedded processing platform is generally limited, a process of detecting the subject to be shot in the image and determining the focusing region takes a long time, resulting in a very limited processing frame rate, usually not more than 30 frames/s. For some scenes that require high real-time performance, for example, a scene in which the subject to be shot needs to be tracked and photographed in real time, such as live streaming, it has high requirements for processing speed, and the current embedded hardware processing platform cannot meet the requirements in these scenes.

Considering that some existing embedded hardware processing platforms for the cameras usually include a plurality of processors, for example, some hardware processing platforms include a CPU, a DSP (Digital Signal Processing) chip, a GPU (Graphics Processing Unit), or other coprocessors, and these processors are good at different types of operations. Therefore, when the subject to be shot is automatically detected from the image to determine the focusing region, the task of detecting the subject to be shot may be split into a plurality of subtasks, and then each of the subtasks is allocated, based on a feature of data processing related to the subtask, to a processor that is good at processing the subtask for execution. In this way, the processing speed of detecting the subject to be shot from the image can be greatly improved, thereby meeting the automatic focusing requirements in scenes with high real-time requirements such as live streaming.

Based on this, an embodiment of the present disclosure provides a control device for a camera, as shown in FIG. 2, a control device 20 may be configured to control automatic focusing of the camera. In some embodiments, the control device 20 may be some embedded hardware processing platforms disposed in the camera. The control device 20 includes a main processor 21, a coprocessor 22, and an artificial intelligence (AI) chip 23. The main processor 21 may be various processors that are good at performing logical operations, for example, may be a CPU or a processor with similar characteristics, the coprocessor 22 may be various processors that are good at performing floating-point operations, and the AI chip 23 may be a processor that is good at processing an image or performing some matrix-related operations.

In some embodiments, the main processor 21 may be a CPU, the coprocessor 22 may be a Neon processor, and the AI chip may be a DSP chip.

Generally, before formally acquiring an image, a camera may first capture some preview images, and some parameters in a photographing process, for example, an aperture size, a shutter speed, a focusing region, or the like, may be determined by analyzing the preview images. Therefore, before the image is formally acquired, the image sensor may be used to acquire a frame of preview image in the current scene, then the position of the subject to be shot is detected from the preview image to determine the focusing region based on the position, and when the next frame image is acquired, focusing of the camera lens may be controlled based on the currently determined focusing region.

In order to automatically detect the subject to be shot from the image to perform focusing processing on the subject to be shot, a target detection network may be pre-trained using a sample image carrying a label, and the subject to be shot is detected by the target detection network. Since operations involved in the process of determining the position of the subject to be shot in the image by the target detection network mainly include matrix-related operations such as convolution, the target detection network may be deployed on the AI chip 23 that is good at such operations, so as to improve the processing speed of such operations.

Generally, the target detection network has certain requirements on the format, resolution and the like of the input image, and hence the AI chip 23 can be used to preprocess the image collected by the camera to obtain a preprocessed image meeting the format requirements of the target detection network. For example, the image output by the camera is usually an image in a NV12 format, and the image processed by the target detection network is usually an image in an RGB format, so the image in the NV12 format may be first converted into the image in the RGB format, and then the image in the RGB format is input into the target detection network for detection.

In addition, before the image is input into the target detection network, it is usually necessary to perform normalization processing on image data. For example, pixel values of R, G, and B channels of the image generally ranges from 0 to 255, and in order to facilitate the operation of the target detection network and improve the processing speed, the pixel values of the three channels may be first normalized, for example, may be mapped to 0 to 1. The process of normalization processing involves more floating-point operations, and in order to improve the processing speed of this step, the coprocessor 22 that is good at floating-point operations may be used to normalize the preprocessed image to obtain normalized image data.

After obtaining the normalized image data, the AI chip 23 may input the normalized image data into a pre-trained target detection network, and the target detection network performs a series of processing on the normalized image data, for example, performing feature extraction on the image, classifying objects in the image based on the extracted feature, and the like, to obtain an output result. The output result may be various types of information that may be used to determine the position of the subject to be shot in the image, and the output result of the target detection network varies depending on the type of the target detection network. For example, if the target detection network is an SSD target detection network (Single Shot MultiBox Detector), an output result of the target detection network may be position information of a plurality of candidate boxes determined from the image, and category scores corresponding to various candidate boxes, and each of the category scores is used to evaluate a probability that a region corresponding to the corresponding candidate box is one or more preset objects. Of course, for other types of target detection networks, the output results may be other information.

After the output result of the target detection network is obtained, post-processing may be further performed on the output result to determine the position of the subject to be shot in the image. Generally, operations involved in the post-processing, and steps of determining a focusing region based on the position of the subject to be shot in the image and controlling the camera to focus according to the focusing region, are mainly some logical operations, and thus these steps can be performed by the main processor 21 which is good at performing the logical operations. The main processor 21 may perform post-processing on the output result of the target detection network. For example, if the output result includes a plurality of candidate boxes, the main processor 21 may perform an NMS (Non Maximum Suppression) processing on the plurality of candidate boxes to remove some candidate boxes with more overlapping regions from the plurality of candidate boxes, or the main processor 21 may normalize the category score of each of the candidate boxes to obtain a probability that each of the candidate boxes belongs to a corresponding object category, then determine a detection box of the subject to be shot from the candidate boxes based on the probabilities, and use a position of the detection box as a position of the subject to be shot.

After determining the position of the subject to be shot in the image, the main processor 21 may determine a focusing region in the image based on the position of the subject to be shot, so as to control the camera to focus according to the focusing region, so that the subject to be shot is imaged clearly. For example, a phase focusing manner may be applied to controlling the camera to automatically focus on the focusing region, or certainly, another automatic focusing manner may be applied.

Considering that some existing embedded hardware processing platforms usually include a plurality of processors such as a main processor, a coprocessor, an AI chip, and the like, when such embedded hardware processing platforms are used to detect the subject to be shot and automatically determine the focusing region, an image preprocessing and a target detection network may be deployed on the AI chip that is good at matrix-related operations, an image normalization processing process may be deployed on the coprocessor that is good at floating-point operations, and a post-processing process on an output result of the target detection network and a focusing control process on a camera may be deployed on the main processor that is good at logical operations. Hence, the focusing region may be automatically determined through cooperation of the plurality of processors, and each processor executes a task that it is good at, which may greatly improve the processing speed and meet the real-time requirement of the live streaming scene.

In most shooting scenes, an object of interest to a user is a person in the scene, for example, in a live streaming scene or some other tracking shooting scenes, a face is usually used as a subject to be shot. In a current technology, during focusing, a face in an image is generally automatically detected by a face detection algorithm, and then a camera is controlled to focus based on a position of the face, so that the photographed face is clear. However, during face detection, the front face can generally be detected accurately, and the side face or the scene where the face faces away from the camera cannot be detected accurately, so missing detection often occurs, which causes the camera to not focus on the side face or head, resulting in unclear imaging of the side face or head. To alleviate this problem, in some embodiments, when the target that the user is to shoot is a person, the entire upper body region of the human body may be used as a subject to be shot. Compared with detecting the human face, a result of detecting the upper body region of the human body is more accurate and stable, so that the problem that the image of the subject to be shot is unclear due to the missing detection can be alleviated. At the same time, for the scene of tracking and shooting, the target person can also be better tracked by detecting the upper body region of the human body.

For a scene in which the subject to be shot is the upper body region of the human body, when the target detection network is trained, as shown in FIG. 3, a large quantity of sample images marked with detection boxes corresponding to the upper body regions of the human bodies may be obtained, and the target detection network is trained using the sample images.

In addition, in a scene in which the subject to be shot is a face, if there are a plurality of faces in a shooting view angle, the current technology can only detect positions of various faces, but cannot determine which face is the focusing object to be focused. Therefore, in some embodiments, if the image includes a plurality of subjects to be shot, the main processor 21 is further configured to: after determining positions of various subjects to be shot in the image, determine a distance between each subject to be shot and a center of the image and depth information of each subject to be shot, based on the position of each subject to be shot; and then determine a focusing object from the plurality of subjects to be shot based on at least one of the foregoing two types of information, and use a region in which the focusing object is located as the focusing region. For example, a subject to be shot that is closest to the center of the image (that is, located at the center of the image) may be used as the focusing object, or a subject to be shot that has minimum depth information (that is, a foreground object in the image) may be used as the focusing object. The depth information refers to a distance between the subject to be shot and the camera. In some scenes, the camera may include a distance measuring device, so the distance between the subject to be shot and the camera may be measured through the distance measuring device, or in some scenes, the distance between the subject to be shot and the camera may also be determined based on parallax of the images collected by camera for the subject to be shot at different angles.

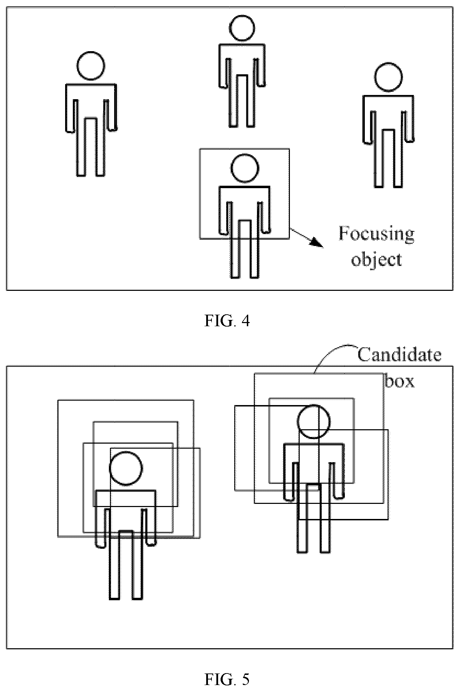

In some embodiments, as shown in FIG. 4, considering that the object that is usually located at the center of the picture and is the foreground of the picture is the object that the user is most interested in, a subject among the plurality of subjects to be shot with the smallest distance from the center of the image and the smallest depth information may be used as the focusing object.

Generally, the target detection network has a certain requirement on the resolution of the input image. For example, for an SSD (Single Shot MultiBox Detector) target detection network, it is usually required that the input image is a color image with a resolution of 300×300, and the resolution of the image acquired by the camera is usually higher. Therefore, in some embodiments, when preprocessing the image acquired by the camera, the AI chip 23 may convert the resolution of the image into a resolution matching the target detection network. For example, downsampling processing may be first performed on an image captured by the camera to convert the image into a color image with a resolution of 300×300.

In addition, the target detection network also has certain requirements on the format of the input image. For example, generally, the target detection network requires that the input image is an image in an RGB format, and the image captured by the camera is generally an image in a NV12 format. Therefore, in some embodiments, when preprocessing an image, the AI chip 23 may convert a format of the image into a format that meets a requirement of the target detection network. For example, an image in a NV12 format may be first converted into an image in an RGBA8888 format, and then converted into an image in an RGB format.

In some embodiments, as shown in FIG. 5, the target detection network may be an SSD (Single Shot MultiBox Detector) target detection network, and an output result of the target detection network may be position information of a plurality of candidate boxes determined from an image and category scores corresponding to various candidate boxes, where each of the category scores is used to evaluate a probability that a region corresponding to the candidate box is one or more preset objects of the subjects to be shot. When determining the position of the subject to be shot in the image based on the output result, the main processor 21 may first perform post-processing on the output result. For example, the main processor 21 may first perform linear regression correction processing on a position and a size of each candidate box, to correct the size and the position of each candidate box. In addition, because there are a plurality of candidate boxes corresponding to the same object in the image, these candidate boxes may have many overlapping regions, and in order to remove some candidate boxes with larger overlapping regions, non-maximum suppression (NMS) processing may be further performed on the candidate boxes. For example, for the plurality of candidate boxes corresponding to an object A, a candidate box with a highest score may be selected from the plurality of candidate boxes as a reference, and then an overlapping region between each of the remaining candidate boxes and this candidate box is determined. If the overlapping regions are greater than a preset threshold, the remaining candidate boxes are removed. After the non-maximum suppression processing is performed, a small number of target candidate boxes are finally left, then the category scores of these target candidate boxes may be normalized to obtain probabilities that the target candidate boxes belongs to respective object categories, and finally a detection box of the subject to be shot is determined from the target candidate boxes based on the probabilities, so that the position of the subject to be shot can be determined. Then, an image region corresponding to the detection box may be further used as a focusing region to control the camera lens to focus.

In some embodiments, the control device may be an embedded hardware processing platform disposed in the camera. Considering that processing performance of the embedded hardware processing platform is limited, occupation of computing and storage resources of the embedded hardware processing platform by the target detection network is reduced, to improve processing efficiency of the embedded hardware processing platform. When selecting a target detection network, a lightweight neural network may be selected as much as possible. For example, a backbone network of the target detection network may be a lightweight mobilenet network, so as to better meet the requirements of the embedded hardware processing platform.

In some embodiments, the camera may be a live streaming camera, and the control device may be an embedded hardware processing platform disposed in the camera. Because a live streaming scene has a relatively high real-time requirement, and performance of a general embedded hardware processing platform is limited, it is relatively difficult to meet the real-time requirement. However, in the embodiments of the present disclosure, when the subject to be shot is detected and the focusing region is determined, performance of various processors in the hardware processing platform can be fully utilized, the entire task is split, and split tasks are deployed on processors good at processing such tasks for execution. Therefore, it is possible to achieve a higher processing speed even in a scene in which computing performance of the hardware processing platform is relatively poor. That is, it can meet the relatively high real-time requirement of the live streaming camera under the condition that the performance of the embedded hardware processing platform is low.

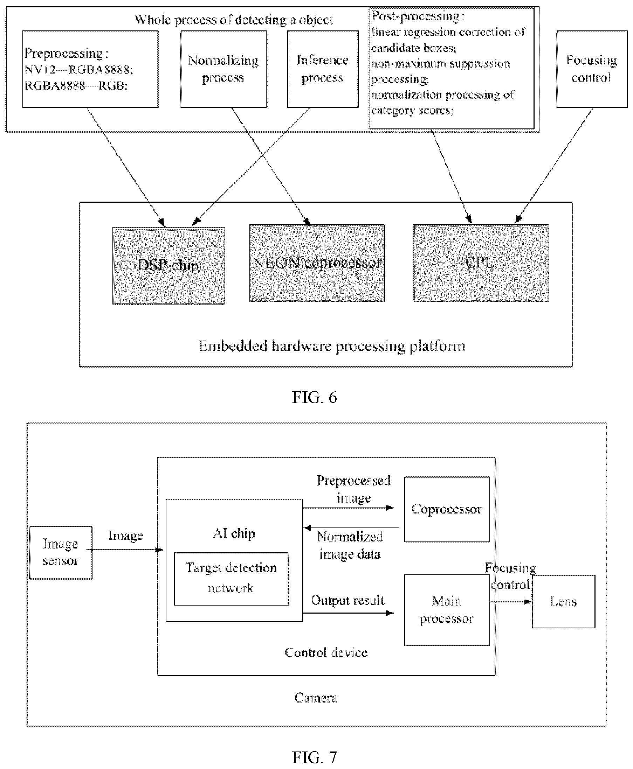

In addition, an embodiment of the present disclosure provides a camera, as shown in FIG. 7, the camera includes an image sensor, a lens and the control device mentioned in any one of the above embodiments. After the image sensor acquires an image, the image sensor may first send the image to the control device, and the control device detects a subject to be shot in the image, determines a focusing region based on a position of the subject to be shot, and controls the lens of the camera to focus.

For a specific structure of the control device, and a specific process of determining the subject to be shot, determining the focusing region based on the subject to be shot, and controlling the lens to focus, reference may be made to the descriptions of the foregoing embodiments, and details are not described herein again.

In order to further explain the control device and the camera provided by the embodiments of the present disclosure, a specific embodiment is explained below.

A live streaming camera is usually configured to shoot a video of a live streaming scene, and then the video is pushed to a live streaming server and distributed to audience clients through the live streaming server. Generally, the focus is on a person during a live streaming process, and therefore the person is expected to be shot clearly. In order to automatically focus on the person in each frame of image, the person may be detected from the image first, and then the region where the person is located is used as the focusing area. Considering that it is impossible to accurately detect the side face or the situation that the face faces away from the lens if the face is detected, in the embodiment, the upper body region of the human body is taken as the subject to be shot, and the stable focusing can be achieved by detecting the upper body region of the human body from the image.

In addition, since the live streaming scene has a high real-time requirement, it is desirable to detect the upper body region of the human body as fast as possible to achieve a high processing frame rate. In order to meet the real-time requirement, in the embodiment, when the target detection network for detecting the upper body region of the human body is deployed on the embedded hardware processing platform of the live streaming camera, the selection and deployment mode of the target detection network is improved, specifically as follows:
1. In the embodiment, the SSD target detection network is used to detect the upper body region of the human body; considering that the embedded processing platform has limited computing and storage resources, the mobilenet is selected as the backbone network; and since the network is a lightweight network, it has low requirements on computing and storage resources, and is convenient to be deployed on the embedded hardware processing platform.
2. As shown in FIG. 6, the embedded hardware processing platform includes a CPU, a Neon coprocessor, and a DSP chip. The whole process of detecting the upper body region of the human body using the target detection network and automatically focusing based on the detected upper body region of the human body may generally be divided into the following stages: a preprocessing process is performed on an image input to the target detection network (the preprocessing mainly includes converting an image in an NV12 format into an image in an RGBA8888 format, and then converting the image into an image in an RGB format); a normalizing process is performed on the image; an inference process of the target detection network is performed (the inference process mainly includes outputting positions of candidate boxes and a category scores corresponding to the candidate boxes); a post-processing process is performed on an output result of the target detection network (the post-processing process mainly includes: performing linear regression correction, non-maximum suppression processing on the candidate boxes; performing normalization processing on the category scores to obtain probabilities that the candidate boxes belong to respective object categories; and determining a detection box of the upper body region of the human body); and a focusing control process is performed (the focusing control process is performed on a camera lens based on a position of the detection box of the upper body region of the human body). Considering that the preprocessing and inference processes includes more matrix-related operations, the two processing steps are deployed on a DSP chip that is good at the matrix-related operations. Since the normalization processing involves more floating-point operations, this processing step is deployed on a Neon coprocessor that is good at the floating-point operations. Since the post-processing and focusing control steps involve a large number of logical operations, they are deployed on a CPU that is good at the logical operations. In this deployment manner, a processing speed of upper body detection of the human body can be greatly improved, and a real-time requirement of automatic focusing in a live streaming scenario can be met.

In addition, if a plurality of upper body regions of human bodies are detected, a upper body region of the human body that is closest to the center of the picture and has the smallest depth information may be used as the focusing region, so that the focusing object may be automatically determined from the plurality of human bodies.

With the live streaming camera provided in the embodiment, the focusing region can be quickly and stably determined, the automatic performance of focusing of the live streaming camera and the quality of images captured by the live streaming camera in an actual application scene are improved, and the real-time requirements of the live streaming camera can be met.

The various technical features in the above embodiments may be arbitrarily combined, as long as there is no conflict or contradiction in the combinations of the features, but they are not described one by one due to space limitation. Therefore, any combination of the various technical features in the above embodiments also falls within the scope of the present disclosure.

Other implementations of the embodiments of the disclosure will be apparent to those skilled in the art from consideration of the disclosure and practice of the disclosure disclosed herein. The embodiments of the present disclosure are intended to cover any variations, uses, or adaptations of the embodiments of the present disclosure, and these variations, uses, or adaptations follow the general principles of the embodiments of the present disclosure and include common knowledge or conventional technical means in the art that are not disclosed in the embodiments of the present disclosure. The specification and embodiments are to be regarded as exemplary only, and the actual scope and spirit of the present disclosure are indicated by the appended claims.

It should be understood that the embodiments of the present disclosure are not limited to the precise structures described above and shown in the accompanying drawings, and that various modifications and changes can be made without departing from the scope thereof. The scope of the embodiments of the present disclosure is limited only by the appended claims.

The foregoing descriptions are merely preferred embodiments of the embodiments of the present disclosure, and are not intended to limit the embodiments of the present disclosure, and any modification, equivalent replacement, improvement, and the like made within the spirit and principle of the embodiments of the present disclosure shall fall within the protection scope of the embodiments of the present disclosure.

## Claims

1. A control device for a camera, comprising a main processor, a coprocessor, and an AI chip, wherein a pre-trained target detection network is deployed in the AI chip;
the AI chip is configured to preprocess an image captured by the camera to obtain a preprocessed image satisfying a format requirement of the target detection network;
the coprocessor is configured to normalize the preprocessed image to obtain normalized image data;
the AI chip is configured to input the normalized image data into the target detection network, and obtain an output result of the target detection network, and the output result is configured to determine a position of a subject to be shot in the image; and
the main processor is configured to determine the position of the subject to be shot in the image according to the output result, and determine a focusing region based on the position to control the camera to focus based on the focusing region.

2. The control device according to claim 1, wherein the subject to be shot comprises an upper body region of a human body.

3. The control device according to claim 1, wherein the image comprises a plurality of subjects to be shot, and the main processor is further configured to determine a focusing object from the plurality of subjects to be shot based on a distance between each of the plurality of subjects to be shot and a center of the image and/or depth information of each of the plurality of subjects to be shot, and take a region where the focusing object is located as the focusing region.

4. The control device according to claim 3, wherein the focusing object is a subject to be shot of the plurality of subjects to be shot with a minimum distance and minimum depth information.

5. The control device according to claim 1, wherein that the AI chip is configured to preprocess the image captured by the camera comprises:
the AI chip is configured to convert a resolution of the image into a resolution matching the target detection network; and/or
the AI chip is configured to convert a format of the image into a format that satisfies a requirement of the target detection network.

6. The control device according to claim 1, wherein the target detection network comprises a Single Shot MultiBox Detector network, the output result comprises positions of a plurality of candidate boxes determined from the image and category scores of the plurality of candidate boxes, each of the category scores is configured to indicate a probability that each of the plurality of candidate boxes belongs to one or more preset object categories, and that the main processor is configured to determine the position of the subject to be shot in the image according to the output result comprises:
the main processing is configured to: perform linear regression correction processing on a position and a size of each of the plurality of candidate boxes, and perform non-maximum suppression processing on a plurality of candidate boxes obtained after the linear regression processing, to obtain target candidate boxes; perform normalization processing on category scores of the target candidate boxes, to obtain probabilities that the target candidate boxes belong to the one or more preset object categories; and select a detection box of the subject to be shot from the target candidate boxes based on the probabilities, and take a position of the detection box as a position of the subject to be shot.

7. The control device according to claim 1, wherein the main processor is a CPU, the coprocessor is a Neon coprocessor, and the AI chip is a DSP chip.

8. The control device according to claim 1, wherein a backbone network of the target detection network is a mobilenet network.

9. The control device according to claim 1, wherein the camera is a live streaming camera, and the control device is an embedded hardware processing platform in the live streaming camera.

10. A camera, comprising an image sensor, a lens, and the control device according to any one of claims 1 to 9, the image being captured by the image sensor, and the control device being configured to control the lens to focus.
